(19) Europäisches Patentamt
European Patent Office
Office européen des brevets

(11) **EP 2 450 852 A1**

(12) **DEMANDE DE BREVET EUROPEEN**

(43) Date de publication:
**09.05.2012 Bulletin 2012/19**

(51) Int Cl.:
*G06T 11/00* (2006.01)   *H04N 1/62* (2006.01)

(21) Numéro de dépôt: **11007429.1**

(22) Date de dépôt: **23.10.2007**

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **24.10.2006 FR 0654483**

(62) Numéro(s) de document de la (des) demande(s) initiale(s) en application de l'article 76 CBE:
**07858653.4 / 2 076 886**

(27) Demande déposée antérieurement:
**23.10.2007 PCT/FR2007/052234**

(71) Demandeurs:
• **Robin, Jean-Marc**
**03200 Vichy (FR)**

• **Blanc, Christophe**
**63230 Pontgibaud (FR)**

(72) Inventeurs:
• **Robin, Jean-Marc**
**03200 Vichy (FR)**
• **Blanc, Christophe**
**63230 Pontgibaud (FR)**

(74) Mandataire: **Gabriel, Franck**
**Twenans**
**10 Rue Saint-Exupery**
**63170 Aubiere (FR)**

Remarques:
Cette demande a été déposée le 13-09-2011 comme demande divisionnaire de la demande mentionnée sous le code INID 62.

(54) **Procédé et dispositif de simulation virtuelle d' une image**

(57) Procédé automatique de simulation virtuelle d'une image à partir d'une image réelle d'un visage, comprenant :
-la détection et l'analyse des formes et/ou contours et/ou composantes dynamiques d'une image d'un visage ;
-l'extraction de points caractéristiques du visage, tels que les coins des yeux et de la bouche, au moyen de modèles paramétriques prédéfinis ;
-la définition de modèles paramétriques spécifiques à partir desdits points caractéristiques extraits, servant de points d'amorçage initiaux ;
-la déformation desdits modèles spécifiques pour s'adapter aux contours des traits présents sur le visage analysé ;
-ladite déformation étant effectuée par la maximisation d'un flux de gradient de luminance et/ou de chrominance le long des contours définis par chaque courbe du modèle.

```
LOCALISATION        pour          FILTRAGE      EXTRACTION DES      DEFORMATION
VISAGES/TETES    chaque région     RETINIEN     POINTS D'ANCRAGE    DES MODELES
    11          d'intérêt           12               13                14
                localisée
```

**Fig. 2**

EP 2 450 852 A1

## Description

La présente invention concerne un procédé et un dispositif permettant de simuler et de traiter automatiquement et en temps réel une ou plusieurs images esthétiques d'un objectif réel, par exemple un visage et/ou une tête d'un personnage en mouvement dans une scène, par la détection et le suivi de ses traits caractéristiques.

Les traits du visage participent à l'acte de communication entre les êtres humains. Néanmoins, il faut remarquer que la visualisation des traits caractéristiques du visage n'est un support à la communication que si ces traits sont extraits avec une précision suffisante. Dans le cas contraire, l'information issue d'une analyse trop sommaire constitue plus une gêne qu'une aide notamment pour des applications industrielles de hauts niveaux pour l'embellissement esthétique d'un visage/tête, par exemple.

On sait qu'il existe dans l'industrie de la beauté, un certain nombre d'équipements pour réaliser virtuellement une esthétique de soi, par exemple la pose numérique d'un maquillage, d'une coloration capillaire, d'une coiffure sous forme de postiche, et dont le procédé mis en oeuvre demeure une version supervisée et par conséquent non automatisée et qui fait appel à des outils infographiques pour la pose des points au plus près des contours. Une courbe de Bézier ou courbes polynomiales paramétriques relie ces points entres eux. Une palette permet à la suite de poser manuellement les transformations recherchées dont le pilotage s'effectue manuellement par un opérateur et/ou l'utilisateur lui-même.

Pour un processus à plus grande échelle, un utilisateur en ligne sur Internet depuis son propre PC ou Mac peut utiliser avec un différé de plus 24 heures, et après postage sur Internet de sa photographie portrait couleur au format JPEG et sous un certain nombre de contraintes, les services d'une plate-forme serveur Web en ASP (« Application Service Provider » ou fournisseur de service d'application) qui assure pour les utilisateurs d'un site Web tierce, les fonctions de détourage des contours, la détection de la couleur des cheveux, de la carnation et des yeux, qui sont obtenus selon des méthodes statistiques et manuelles réalisées par l'intervention d'équipes techniques humaines.

La photographie peut aussi être retouchée selon différentes techniques de calques. Ainsi, chaque élément peut être placé sur un calque différent, le résultat final étant obtenu par la superposition de tous les calques, ce qui permet d'obtenir la photographie retouchée définitive pour son exploitation. On peut de cette manière décomposer le travail, ce qui rend plus simple la tâche à réaliser pour l'utilisateur. La photographie retouchée peut ensuite être exploitée localement dans une application dédiée, de type active X Microsoft®. Cette technologie et l'ensemble d'outils développés par Microsoft® permettent de programmer des composantes qui peuvent faire interagir le contenu d'une page Web avec des applications exécutables sur l'ordinateur de l'internaute de type PC, notamment sous système d'exploitation Windows®. Une autre technique équivalente consiste à utiliser l'application Java®.

On appelle ces applications « Virtual Makeover » (ou refaçonnage virtuel) pour une utilisation locale sur PC ou MAC et « Virtual Makeover On line » (ou refaçonnage virtuel en ligne) pour l'Internet. L'avantage de ce type de systèmes est de rendre possible l'obtention d'images esthétiques sans manipulation explicite de logiciels d'infographie professionnels, tels Adobe Photoshop® ou Paintshop Pro®, ni autres types de logiciels de retouche, de traitement et de dessin assistés par ordinateur. Ils sont principalement utilisés pour le traitement de photographies numériques, mais servent également à la création d'images *ex nihilo.*

Plus récemment, il a été développé des équipements qui utilisent des techniques de traitement d'images automatisés qui permettent, à partir d'images numérisées, de produire d'autres images numériques ou d'en extraire de l'information, ce qui permet d'améliorer l'utilisation localement. En revanche, la qualité du codage liée à la segmentation des traits caractéristiques du visage nécessite des paramètres de prise de vue standardisés de type cabine dans le but d'améliorer la robustesse du traitement à partir d'une image statique couleur aux formats JPEG (« Joint Photographic Experts Group ») et BMP (« Bitmap »). La simulation demeure supervisée et s'effectue séquentiellement avec un traitement qui varie de 5 à 10 minutes pour obtenir une image esthétique en 2 dimensions et jusqu'à 60 minutes environ pour une image en 3 dimensions, par exemple la simulation d'un maquillage.

Le document WO 01/75796 décrit un système permettant de transformer virtuellement une image fixe, telle qu'une photo d'un visage.

Toutefois, tous ces procédés et dispositifs énumérés ci-dessus demeurent peu pratiques par manque d'instantanéité et en raison d'une précision trop aléatoire, du fait de leurs faibles robustesses par rapport aux diverses contraintes de poses du sujet et aux diverses conditions environnementales du monde physique et/ou artificiel. De plus, les techniques ne sont pas actuellement en mesure de proposer des méthodes robustes et de bonne qualité en analyse et transformation de visage en temps réel, a fortiori s'il s'agit d'un visage/tête d'un personnage en mouvement dans une scène a priori quelconque.

La robustesse vis-à-vis de la grande diversité des individus et des conditions d'acquisition, notamment les différentes présentations dans la pose d'un personnage, les matériels, les conditions d'éclairages incertains, les différents fonds fixes ou mobiles, etc. en sont le point crucial et représentent un certain nombre de verrous technologiques et scientifiques pour envisager une industrialisation à grande échelle de tels procédés sous formes de dispositifs professionnels ou domestiques.

La présente invention a pour but de fournir un procédé et un dispositif de traitement d'images ne reproduisant pas les inconvénients de l'art antérieur.

La présente invention a notamment pour but de fournir un tel procédé et dispositif pour traiter des séquences d'images vidéo, en particulier pour des sujets en mouvement.

La présente invention a aussi pour but de fournir un tel procédé et dispositif, qui soit simple, fiable et peu coûteux à réaliser et à utiliser.

La présente invention concerne donc un procédé et un dispositif numérique à haut rendement, permettant dans un flux vidéo composé d'une succession d'images, par exemple de 25 à 30 images par seconde, composant l'illusion du mouvement, d'obtenir par voie informatique et en temps réel, une extraction automatique et précise des contours de l'ensemble des traits caractéristiques du visage, de la chevelure, la couleur des yeux, de la carnation et des cheveux et la prise en compte de certaines occlusions. L'ensemble conduit à réaliser une simulation virtuelle esthétique et individualisée d'un objectif initial, par exemple un visage/tête d'un personnage en mouvement dans une scène, dans un flux vidéo par un traitement robuste et temps réel ou bien différé ou «play-back». Cette simulation peut comprendre un codage puis une transformation par une nouvelle lecture de la séquence.

La présente invention a donc pour objet un procédé automatique de simulation virtuelle d'une séquence d'images vidéo individualisée pour chaque utilisateur, réalisable à partir d'une séquence d'images vidéo réelle d'un visage/tête en mouvement, comprenant lors d'une phase d'acquisition et d'initialisation : la détection et l'analyse des formes et/ou contours et/ou composantes dynamiques d'une image du visage/tête de la séquence vidéo réelle, l'extraction de points caractéristiques du visage/tête, tels que les coins des yeux et de la bouche, au moyen de modèles paramétriques prédéfinis ; lors d'une phase d'évolution : la définition de modèles paramétriques spécifiques à partir desdits points caractéristiques extraits, servant de points d'amorçage initiaux, la déformation desdits modèles spécifiques pour s'adapter aux contours des traits présents sur le visage analysé, la détection et l'analyse de la structure cutanée d'une ou plusieurs régions du visage/tête ; et lors d'une phase de suivi et de transformation : la modification des traits caractéristiques des autres images de la séquence vidéo, la modification des couleurs de la structure cutanée, lesdites modifications étant réalisées en fonction de critères prévus dans au moins une base de données et/ou en fonction de critères de décision d'au moins un système expert d'ordre 0+ ou 1.

Avantageusement, l'étape de détection et d'analyse, pour la détermination d'informations spatiales région/contour et temporelles, est réalisée par la maximisation des flux de gradient de luminance et/ou de chrominance.

Avantageusement, lesdites modifications sont obtenues par translations des voisinages des points caractéristiques de l'image précédente dans l'image suivante, des modèles affines, incluant une matrice de déformation, pouvant être utilisés lorsque le voisinage des points caractéristiques peut également subir une déformation.

Avantageusement, la phase de suivi utilise un algorithme pour suivre des points caractéristiques d'une image à l'autre.

Avantageusement, ledit algorithme n'utilise que le voisinage de points caractéristiques.

Avantageusement, pour éviter l'accumulation d'erreurs de suivi, les points caractéristiques sont recalés en utilisant une version simplifiée des contours actifs, et/ou en déformant les courbes d'un modèle obtenu à l'image précédente.

Avantageusement, le procédé comprend une étape de modélisation de la bouche fermée et/ou ouverte au moyen d'une pluralité de points caractéristiques reliés par une pluralité de courbes cubiques.

La présente invention a aussi pour objet un dispositif pour mettre en oeuvre le procédé décrit ci-dessus, comprenant un système informatique, une source lumineuse, un système de gestion de messages électroniques, au moins une base de données, locale ou déportée sur les réseaux numériques, tel qu'Internet, et/ou au moins un système expert d'ordre 0+ ou 1, permettant d'obtenir et de transformer une séquence d'images réelles numériques en séquence d'images virtuelle, de préférence à la vitesse de 25 images par seconde, ladite séquence d'images virtuelle étant transformée suivant des critères de décision d'au moins un système expert d'ordre 0+ ou 1.

Avantageusement, ledit système informatique est basé sur un microprocesseur type CPU (« Central Processing Unit ») mono, double, quadri coeurs et supérieurs, ou processeurs multi coeurs classiques, types pentium, athlon ou supérieurs ou type SPU (« Streaming Processor Unit »), équipé d'un coeur principal et jusqu'à huit coeurs spécifiques, disposé dans une cabine, une console, un appareil libre service, un dispositif de poche ou mobile, une télévision numérique, un serveur local, ou déporté sur les réseaux numériques, tel qu'Internet, au moins une caméra vidéo numérique, au moins un écran, au moins une imprimante et/ou une connexion aux réseaux numériques, tel qu'Internet, dans lequel le système informatique assurant le traitement de l'image comprend un ordinateur doté d'un disque dur, de préférence d'une capacité égale au moins à 500K Octets, et/ou d'une mémoire numérique de stockage, un ou plusieurs supports, notamment de type Cédérom, DVD, Multimedia Card®, Memory Stick®, MicroDrive®, XD Card®, SmartMedia®, SD Card®, Compact Flash® types 1 et 2, clé USB, d'un modem ou d'un module de connexion filaire ou radio fréquences aux réseaux numériques, tel qu'Internet, et d'un ou plusieurs modules de connexions pour réseaux locaux de type ethernet, Bluetooth®, infrarouge, wifi®, wimax® et similaire.

Avantageusement, après l'affichage de la séquence d'images virtuelle sur un écran, une imprimante procède localement, ou en déporté, à l'impression, de préférence couleur, d'au moins une photographie choisie parmi toute ou partie de la séquence d'images virtuelle.

Avantageusement, le module de traitement d'images, pour réaliser les étapes d'acquisition, de détection, de transformation et de suivi, est intégré dans un ou plusieurs processeurs spécialisés dans le traitement des signaux du type DSP (« Digital Signal Processor » ou processeur de signal numérique).

La présente invention concerne donc un procédé et un dispositif permettant de simuler par un traitement automatique et dans toutes les conditions environnementales et de poses du sujet en mouvement, une image ou une suite d'images esthétiques dans un flux vidéo, à partir d'une ou plusieurs images d'un objectif réel, par exemple un visage/tête d'un personnage en mouvement dans une scène, où l'on extrait de l'image et/ou de la suite d'images réelles, capturées de préférence par une caméra vidéo numérique couleur, à la cadence temps réel, les contours des composantes dynamiques du visage/tête du personnage en mouvement, afin de produire des paramètres pertinents pour synchroniser les outils de transformations esthétiques virtuelles, par exemple dans les régions des yeux, des sourcils, de la bouche et des voisinages, en fonction de critères multiples prévus dans au moins une base de données locale et/ou déportée sur les réseaux numériques, tel qu'Internet, et/ou en fonction de critères de décision préalablement définis dans la base de connaissance d'au moins un système expert d'ordre 0+ ou 1.

Le système informatique mis en oeuvre peut être installé dans une cabine ou une console ou un appareil libre service ou un dispositif de poche ou mobile ou une télévision numérique ou un serveur local ou déporté sur les réseaux numériques, dont Internet, ou toutes formes d'appareils possibles à venir.

Dans sa première destination, il peut comporter un ordinateur ou un microprocesseur pour le traitement type CPU (« Central Processing Unit» ou unité centrale de traitement), mono, double, quadri coeurs et supérieurs ou processeurs multi coeur classiques types pentium, athlon ou supérieurs, ou type SPU (« Streaming Processor Unit » ou unité de traitement en continu), équipé d'un coeur principal et jusqu'à huit coeurs spécifiques ou plus, disposant d'un disque dur d'au moins 500K Octets et/ou d'une mémoire numérique de stockage, un ou plusieurs supports de type Cédérom, DVD, Multimedia Card®, Memory Stick®, MicroDrive®, XD Card®, SmartMedia®, SD Card®, Compact Flash® types 1 et 2, clé USB ou autres, tous types de modems ou de modules de connexions filaires ou radio fréquence aux réseaux numériques, tel qu'Internet, un ou plusieurs modules de connexions pour l'environnement local de type Bluetooth®, infrarouge, wifi®, wimax® et à venir, une caméra couleur vidéo fixe ou type télévision numérique mono CCD et supérieur, une source lumineuse discrète ou non, tous types d'écrans, de préférence couleurs, actuels et à venir, tous types d'imprimantes monochrome ou couleurs actuels et à venir, une ou plusieurs bases de données locales ou déportées sur les réseaux numériques dont Internet et selon les cas un système expert d'ordre 0+ ou 1.

Dans une seconde destination, si l'on souhaite installer un tel système de simulation dans les linéaires des magasins de produits cosmétiques, dans un institut ou cabinet spécialisé, de manière à être le moins encombrant possible voire cinétique, il pourrait être souhaitable qu'en fonction de la taille du client et pour son confort, le simulateur se déplace par lui-même à la hauteur du visage du ou de la cliente. C'est-à-dire qu'il ne tient pas de place au sol.

En ce cas, le système de vision défini supra peut être composé d'un éclairage discret lumière du jour ou diode lumineuses blanches, d'une caméra mono CCD ou supérieur, d'une carte graphique, d'un écran couleur plat et tactile et d'une imprimante de type ticket ou couleur papier A4 et A3 voire supérieur. L'ensemble peut alors être totalement intégré dans un « Panel PC» ultra compact léger dont l'encombrement est donné par les dimensions de tous types d'écran plat, de préférence couleur. Le traitement est local et l'ensemble des mises à jour techniques ou des contenus comme la maintenance peut s'effectuer via une connexion filaire ou radio fréquence aux réseaux numériques dont Internet.

Le système fonctionne par l'asservissement visuel du dispositif via sa caméra, en se calant automatiquement sur le visage de l'utilisateur par l'utilisation d'un module de détection et de suivi d'un visage/tête d'un personnage. A partir d'une position que l'on dira d'équilibre, quand une simulation sera souhaitée par un utilisateur, le système s'immobilisera lorsqu'il aura détecté son objectif, par exemple l'image d'un visage/tête. Selon les conditions environnementales, le système de vision peut régler de façon automatique l'éclairage et le zoom de la caméra afin d'avoir une taille d'image et un code image du visage sur l'écran de qualité optimale quasi constante.

Dans une troisième destination, le système de pilotage des fonctions du procédé peut être un terminal, tel un clavier alphanumérique, une souris ou tous autres moyens. La caméra, selon le terminal, peut être reliée par toutes connections ou tous types de réseaux numériques à un système d'édition, avec de préférence les sorties sur écran couleur et/ou papier assemblées en un seul dispositif à côté de l'utilisateur. La partie traitement et calcul peut être gérée par un ou plusieurs serveurs locaux, ou déportés sur les réseaux numériques, dont Internet, et équipé d'au moins un microprocesseur, par exemple de type CPU (« Central Processing Unit ») 32 ou 64 bits mono, double, quadri coeurs et supérieurs ou processeurs multi coeur classiques types pentium, athlon, ou de type SPU (« Streaming Process Unit ») ou un coeur principal et huit coeurs spécifiques type cell, et tous types de mémoires électroniques ou magnétiques.

Quelque soit le dispositif mis en oeuvre, la capture des images en couleur est avantageusement obtenue en temps réel au moyen de tous types de caméras vidéo numériques, de préférence couleurs, tel qu'une caméra vidéo numérique couleur mono ou CCD, ou un dispositif à couplage de charge et supérieure, une caméra vidéo numérique couleur CMOS (métal-oxyde-semiconducteur) complémentaire, ou analogue par exemple une Webcam, afin de fournir, en temps réel, une simulation esthétique précieuse par détection en haute qualité, des composantes géométriques et dynamiques du visage et par un traitement d'images approprié. Pour être suffisamment convivial, le traitement peut s'effectuer localement ou sur serveur déporté et selon la vitesse de calcul, en temps réel ou assimilé comme tel, ou en mode relecture.

L'ensemble du traitement peut être réalisé sans trop de contraintes d'éclairage ni de poses pour chaque personnage présent dans l'image, considérant un fond incertain fixe ou mobile, et un certain nombre d'occlusions.

Ainsi, dans diverses conditions environnementales du monde physique et/ou artificiel, les expérimentations démontrent que le procédé mis en oeuvre selon la présente invention demeure robuste et suffisamment précis lors de la phase d'extraction et d'évolution des contours des traits permanents du visage/tête à savoir notamment : les yeux, les sourcils, les lèvres, la chevelure et les autres éléments morphologiques, selon le travail de transformation esthétique recherché, etc.

Pour chacun des traits considérés, une bouche souriante ou parlante par exemple, divers modèles paramétriques spécifiques capables de rendre compte de toutes les déformations possibles peuvent être prédéfinis et mis en oeuvre en fonction des critères de décision de la base du système expert.

Le procédé comprend avantageusement trois phases synchronisées:

1. Une phase d'acquisition et d'initialisation : on procède à l'analyse et à la détection des formes et des contours du visage /tête dans une image vidéo numérisée correspondant à la première image d'une séquence. Les points caractéristiques et régions d'intérêts du visage/tête sont extraits, coins des yeux et de la bouche par exemple, et servent de points d'ancrage initiaux pour chacun des modèles paramétriques adaptés prédéfinis. Dans la phase d'évolution, chaque modèle est déformé afin de coïncider au mieux avec les contours des traits présents sur le visage analysé. Cette déformation se fait par maximisation d'un flux de gradient de luminance et/ou de chrominance le long des contours définis par chaque courbe du modèle. La définition de modèles permet d'introduire naturellement une contrainte de régularisation sur les contours recherchés. Néanmoins, les modèles choisis restent suffisamment flexibles pour permettre une extraction réaliste des contours des yeux, des sourcils et de la bouche.

2. Une phase de suivi et de transformation. Le suivi permet d'effectuer la segmentation de manière plus robuste et plus rapide dans les images suivantes de la séquence vidéo. La transformation conduit à la modification des zones caractéristiques fines du visage/tête suivi dans la séquence vidéo en fonction de critères multiples prévus en base de données et/ou selon le cas en fonction de critères de décision d'un système expert d'ordre 0+ ou 1.

3. Une phase de restitution offrant sur un écran et/ou sur papier et/ou via un serveur sur tous réseaux numériques, les résultats de la phase de transformation pour toute la séquence vidéo.

Au cours de la première phase, le système de traitement de la séquence vidéo va coordonner plusieurs opérations successives.

Dans un premier temps, il procède sur la première image de la séquence à la localisation du visage/tête du personnage en mouvement dans une scène en considérant l'information de chrominance typique associée à la peau. Le visage/tête détecté correspond à une zone d'intérêt dans l'image.

Suite à cette extraction, le procédé permet de s'affranchir des variations d'illumination en utilisant un filtrage adapté du comportement de la rétine, pour la région d'intérêt.

Le système procède alors, pour la région d'intérêt ainsi filtrée, à l'extraction des traits caractéristiques du visage, de préférence à l'aide de modèles paramétriques adaptés, à savoir les iris, les yeux, les sourcils, les lèvres, le contour du visage et le casque des cheveux.

Pour l'iris, on recherche le demi-cercle qui maximise le flux de gradient de luminance normalisée dans chaque quart droit et gauche du rectangle englobant le visage.

Le positionnement initial de chaque modèle sur l'image à traiter a lieu après l'extraction automatique de points caractéristiques sur le visage.

Un processus de suivi de points de gradient de luminance maximum peut être utilisé pour détecter le coin des yeux. Deux courbes de Bézier, dont une améliorée qui s'incurve vers son extrémité pour épouser naturellement le dessin du contours inférieur de l'oeil, modèles choisis pour les contours supérieurs et inférieurs de l'oeil, peuvent être initialisées par les deux coins des yeux et le point le plus bas du cercle détecté pour l'iris pour le contour inférieur, et par les deux coins des yeux et le centre du cercle détecté pour l'iris pour le contour supérieur.

Pour l'initialisation de la courbe de Bézier associée aux sourcils, on peut extraire les deux coins intérieur et extérieur de chaque sourcil.

Le modèle proposé pour la modélisation des lèvres est avantageusement au moins composé de cinq courbes indépendantes, chacune d'entre elles décrivant naturellement une partie du contour labial extérieur et au moins deux courbes pour les contours intérieurs. Les points caractéristiques de la bouche en vue d'initialiser le modèle peuvent être analysés en utilisant conjointement une information discriminante combinant la luminance et la chrominance ainsi que la convergence d'un type de contour actif permettant de s'affranchir des réglages des paramètres du contour ainsi que de sa haute dépendance à la position initiale.

La modélisation du contour du visage utilise avantageusement huit points caractéristiques situés sur ce contour. Ces huit points initialisent un contour modélisé par des quarts d'ellipse déformables, selon la position du visage dans une dimension temporelle.

Le casque des cheveux peut être segmenté à partir de la détection du contour du visage en associant le filtrage du fond de l'image à l'utilisation de contours actifs. Des points caractéristiques situés sur le contour des cheveux sont ainsi détectés. Entre chacun de ces points, le modèle utilisé peut être une courbe polynomiale cubique.

Tous les modèles initiaux proposés peuvent ensuite être déformés pour que chaque contour recherché soit un ensemble de points de gradient de luminance maximum. Les courbes sélectionnées seront de préférence celles qui maximisent le flux de gradient de luminance normalisé à travers le contour.

Au cours de la deuxième phase, l'étape de suivi permet d'effectuer la segmentation dans les images suivantes de la séquence vidéo. Durant cette étape, les résultats obtenus dans les images précédentes fournissent des informations supplémentaires susceptibles de rendre la segmentation plus robuste et plus rapide. La procédure de suivi précis, selon un mode de réalisation avantageux de la présente invention, utilise un algorithme qui permet de suivre des points caractéristiques d'une image à l'autre. Cette méthode différentielle, n'utilisant que le voisinage de points, apporte un gain de temps significatif par rapport à une technique d'extraction directe. Pour éviter une accumulation d'erreurs de suivi, les points caractéristiques peuvent être recalés en utilisant une version simplifiée des contours actifs, et/ou en déformant les courbes d'un modèle obtenu à l'image précédente.

L'étape de transformation peut conduire à la modification des zones caractéristiques fines du visage/tête suivi dans la séquence vidéo en fonction de critères multiples prévus en base(s) de données et/ou selon le cas en fonction de critères de décision d'au moins un système expert d'ordre 0+ ou 1. La présente invention peut proposer à l'utilisateur différents looks, palettes, présents en base de données pour la visualisation sur son visage. Afin de proposer une simulation esthétique précise et réaliste dépendante du visage traité, le système peut rechercher, à partir de calcul de ratios anthropométriques effectués par un système expert d'ordre 0+ ou 1, les zones caractéristiques, par exemple les pommettes, à transformer. De plus, pour chaque visage, le système expert peut définir des procédures de maquillage qui sont dépendantes de la forme du visage, rond ou allongé ou carré ou triangulaire ou ovale, et de certaines caractéristiques, yeux écartés ou yeux rapprochés ou yeux égaux, taille du nez, etc. Ces règles peuvent être communiquées au module de transformation pour une simulation réaliste et dépendante de chaque visage à transformer. Le procédé réalise également au cours de cette phase une classification des visages telle homme, femme, enfant, adolescent notamment.

Finalement, la phase de restitution offre sur un écran et/ou sur papier et/ou via un serveur sur tous réseaux numériques, les résultats de la phase de transformation pour toute la séquence vidéo et/ou pour une partie de cette séquence

D'autres caractéristiques et avantages de la présente invention apparaîtront au cours de la description détaillée suivante, faite en référence aux dessins joints, donnés à titre d'exemples non limitatifs, et sur lesquels :

- la figure 1 est un schéma sous forme de blocs d'un système de simulation virtuelle d'images selon un mode de réalisation avantageux de la présente invention ;
- la figure 2 est un schéma bloc illustrant la phase d'extraction des visages/têtes de personnages et des zones caractéristiques selon un mode de réalisation avantageux de la présente invention;
- la figure 3 représente le schéma bloc du filtrage rétinien;
- la figure 4 est un dessin d'un des modèles paramétriques adaptés au suivi des lèvres en mouvement ;
- la figure 5 représente le résultat de l'extraction automatique des zones caractéristiques du visage à partir d'une séquence vidéo présentant un seul personnage avec la tête en mouvement devant l'objectif de la caméra selon les axes d'orientations X, Y et Z symbolisés sur cette même figure, à savoir le contour du visage, l'iris, les yeux, la bouche les sourcils, et le casque des cheveux ;
- La figure 6 représente le résultat d'une simulation esthétique tel un look, avant et après transformation.

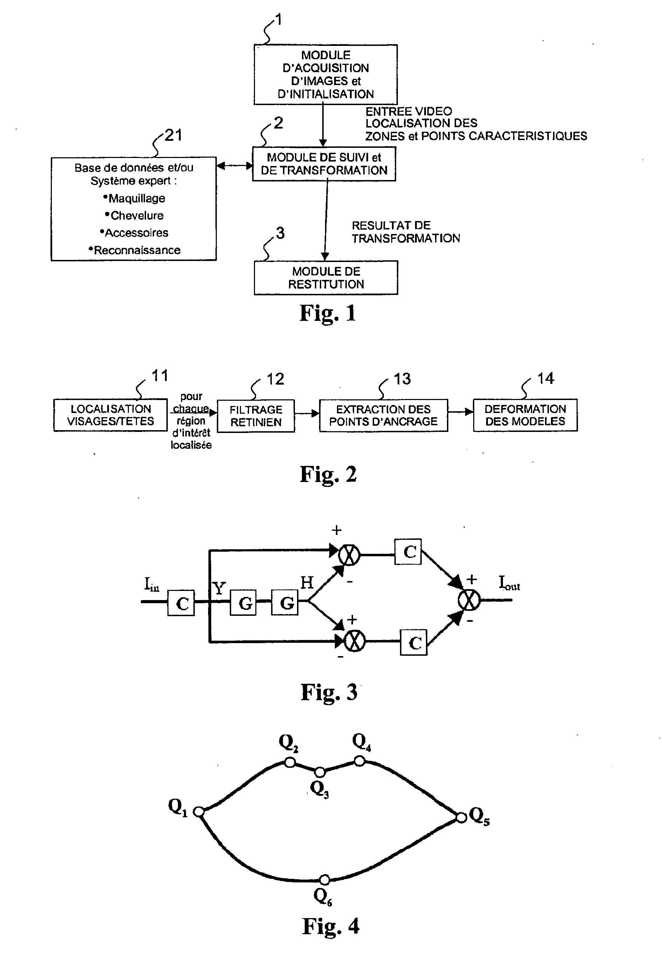

La figure 1 représente un exemple d'un système de détection et suivi automatique temps réel des traits caractéristiques d'un objectif réel, tel un visage/tête d'un personnage en mouvement dans une scène, avec possibilité de simulation virtuelle d'images et comprenant un module d'acquisition d'images et d'initialisation 1, un module de suivi et de transformation 2 et un module de restitution 3. Chaque module va être décrit en détail ci-après.

Le module d'acquisition d'images et d'initialisation 1 est mis en oeuvre à partir de tous types de caméras vidéo numériques couleurs, tel qu'une caméra vidéo numérique couleur mono CCD ou dispositif à couplage de charge et supérieure, une caméra vidéo numérique couleur CMOS (métal-oxyde-semi-conducteur) complémentaire, ou analogue.

La séquence d'images prises par le module d'acquisition est analysée afin de détecter les zones et points caractéristiques du visage/tête. Cette analyse est mise en oeuvre sous forme d'un microprocesseur de type CPU 32 ou 64 bits, SPU, ou un coeur principal et huit coeurs spécifiques type cell, mono, double, quadri coeurs et supérieurs ou processeurs multi coeur classiques types pentium, athlon, d'un ordinateur personnel ou d'un processeur de traitement du signal numérique. Les zones et points caractéristiques du visage/tête du personnage en mouvement dans une scène ainsi extraits et couplés au flot d'images sont envoyés au module de suivi et de transformation qui selon les critères multiples prévus dans une ou plusieurs base(s) de données, ou selon le cas, en fonction de critères de décision d'un ou plusieurs système(s) expert 21, renvoie au module de restitution 3 ses résultats : une séquence vidéo avec, par exemple, le visage maquillé. Le module de restitution offre, selon la présente invention, les résultats sur n'importe quel type d'écran (cathodique, LCD, plasma ou analogue) et/ou sur n'importe quel format de papier et/ou via un serveur sur tous réseaux numériques, par exemple Internet.

La figure 2 représente un schéma sous forme de blocs illustrant la phase d'extraction du visage/tête du personnage et des zones caractéristiques selon la présente invention.

Au niveau du module d'initialisation 1, le logiciel de traitement de la séquence vidéo cadencé à la vitesse d'acquisition du capteur numérique vidéo va coordonner plusieurs opérations successives selon l'invention.

Dans un premier temps, il procède à la localisation 11 du visage/tête du personnage dans une scène. A cette fin, on considère l'information de chrominance typique associée à la peau. On délimite ainsi la région d'intérêt de l'image par un rectangle englobant. Une phase de prétraitement 12 de cette région d'intérêt permet de s'affranchir des variations d'illumination en utilisant un filtrage adapté inspiré du comportement de la rétine. Ce filtrage permet, par la réalisation d'une succession de filtrages et de compressions adaptatives, de réaliser un lissage local des variations d'éclairement. Soit G un filtre gaussien de taille 15x15 et d'écart type $\sigma = 2$. Soit $I_{in}$ l'image initiale et $I_1$ le résultat de son filtrage par G. A partir de l'image $I_1$, on définit l'image $X_0$ par la relation :

$$X_0 = \frac{0.1 + 410 I_1}{105.5 + I_1}$$

L'image $X_0$ permet de définir la fonction de compression C par la relation :

$$C : I \rightarrow \frac{(255 + X_0) I}{X_0 + I}$$

La figure 3 donne le schéma bloc du filtrage rétinien, la sortie de ce filtrage est notée $I_{out}$. Par exemple, à l'issu du filtrage, sur un visage éclairé latéralement qui présente de ce fait une variation importante de luminance entre les parties gauche et droite du visage, les variations de luminance seront fortement atténuées.

L'extraction automatique des contours des traits permanents du visage, à savoir le contour du visage, dont l'homogénéité est prise en compte, les iris, les yeux, les sourcils, les lèvres, le casque des cheveux, suit dans un deuxième temps. Pour chacun des traits considérés, un modèle paramétrique spécifique (courbes polynomiales cubiques, courbes de Bézier, cercle, etc.) capable de rendre compte de toutes les déformations possibles est défini.

Pour l'iris, on recherche le demi-cercle qui maximise le flux de gradient de luminance normalisée dans chaque quart droit et gauche du rectangle englobant le visage puisque le contour de l'iris est la frontière entre une zone sombre, l'iris, et une zone claire, le blanc de l'oeil. La méthode de maximisation du flux de gradient normalisé présente l'avantage d'être très rapide, sans réglage de paramètre et elle conduit sans ambiguïté à la sélection du bon demi-cercle puisque le flux de gradient normalisé présente toujours un pic très marqué correspondant à la position correcte pour le demi-cercle recherché.

Des points caractéristiques du visage sont extraits (coins des yeux et de la bouche par exemple) et servent de points d'ancrage initiaux 13 pour chacun des autres modèles.

Les courbes de Bézier, dont une incurvée vers son extrémité, modèles choisis pour les contours supérieurs et inférieurs de l'oeil, sont initialisées par les deux coins des yeux, détectés par un processus de suivi de points de gradient de luminance maximum, et le point le plus bas du cercle détecté pour l'iris pour le contour inférieur et par les deux coins des yeux et le centre du cercle détecté pour l'iris pour le contour supérieur.

Pour l'initialisation des courbes de Bézier associées aux sourcils, on extrait avantageusement les deux coins intérieur et extérieur de chaque sourcil. Pour chaque sourcil, la zone de recherche de ces points est réduite à la zone de l'image située au-dessus de l'iris détecté. Pour le calcul des abscisses des coins intérieurs et extérieurs, on recherche les abscisses des points pour lesquels il y a un changement de signe ou annulation de la dérivée de la projection horizontale de l'image vallée suivant les lignes. Pour le calcul des ordonnées de ces points, on recherche l'abscisse du maximum de la projection verticale de l'image vallée suivant les colonnes. Les deux coins intérieur et extérieur et le centre de ses deux coins servent de points de contrôle initiaux pour la courbe de Bézier associée à chaque sourcil. Cette méthode étant sujette au bruit, les points ainsi détectés sont réajustés lors de la phase de déformation du modèle associé aux sourcils.

Le modèle proposé pour la modélisation des lèvres peut être composé de cinq courbes cubiques indépendantes, chacune d'entre elles décrivant une partie du contour labial extérieur. La figure 4 représente un dessin de ce modèle pour une bouche fermée. Contrairement à la plupart des modèles proposés dans la littérature, ce modèle original est suffisamment déformable pour représenter fidèlement les spécificités des lèvres très différentes. Entre $Q_2$ et $Q_4$, l'arc de Cupidon est décrit par une ligne brisée tandis que les autres portions du contour sont décrites par des courbes polynomiales cubiques. De plus, on impose d'avoir une dérivée nulle au point $Q_2$, $Q_4$ et $Q_6$. Par exemple la cubique entre $Q_1$ et $Q_2$ doit avoir une dérivée nulle en $Q_2$. L'extraction des points caractéristiques $Q_1$, $Q_2$, $Q_3$, $Q_4$, $Q_5$, $Q_6$ de la bouche en vue d'initialiser le modèle se fait en utilisant conjointement une information discriminante combinant la luminance et la chrominance ainsi que la convergence d'un type de contour actif permettant de s'affranchir des réglages des paramètres du contour actif ainsi que de sa haute dépendance à la position initiale. Il en va de même pour les contours labiaux intérieurs où deux courbes permettent d'épouser parfaitement les contours intérieurs.

La détection du contour intérieur est plus difficile lorsque la bouche est ouverte, à cause des variations non-linéaires d'apparence à l'intérieur de la bouche. En effet, lors d'une conversation, la zone située entre les lèvres peut prendre différentes configuration : dents, cavité orale, gencives et langue.

Le modèle paramétrique pour le contour intérieur, lorsque la bouche est ouverte, peut être composé de quatre cubiques. Pour une bouche ouverte, « l'arc de Cupidon intérieur » est moins prononcé que pour une bouche fermée ; ainsi deux cubiques suffisent pour précisément extraire le contour intérieur supérieur des lèvres. Avec quatre cubiques, le modèle est flexible et permet de surmonter le problème de la segmentation du contour intérieur pour des bouches asymétriques.

Deux contours actifs appelés « jumping snakes » peuvent être utilisés pour ajuster le modèle ; un premier pour le contour supérieur et un second pour le contour inférieur.

La convergence d'un « jumping snake » est une succession de phases de croissance et de saut. Le « snake » est initialisé à partir d'un germe, puis il grandit en ajoutant des points à gauche et à droite du germe. Chaque nouveau point est trouvé en maximisant un flux de gradient à travers le segment formé par le point courant à ajouter et le point précédent. Finalement, le germe saute vers une nouvelle position plus proche du contour recherché. Les processus de croissance et de saut sont répétés jusqu'à ce que l'amplitude du saut soit inférieure à un certain seuil. L'initialisation des deux « snakes » commence par la recherche de deux points sur les contours supérieur et inférieur, et appartenant à la verticale passant par $Q_3$ sur la figure 4. La difficulté de la tâche réside dans le fait qu'il peut y avoir différentes zones entre les lèvres, qui peuvent avoir des caractéristiques (couleur, texture ou luminance) similaires ou complètement différentes que celles des lèvres, quand la bouche est ouverte.

A partir des points clefs détectés, le contour intérieur final peut être donné par quatre cubiques. Les deux cubiques pour le contour supérieur peuvent être calculées par la méthode des moindres carrés. De même, les deux cubiques du contour inférieur peuvent aussi être calculées par la méthode des moindres carrés.

La modélisation du contour du visage utilise de préférence huit points caractéristiques situés sur ce contour a priori puisqu'un visage peut présenter des cheveux très longs qui recouvrent totalement le front et éventuellement les sourcils et les yeux : deux points au niveau des yeux, deux points au niveau des sourcils, deux points au niveau de la bouche, un point au niveau du menton et un point au niveau du front, qui sont extraits à partir d'un seuillage dans le plan V de la représentation HSV de l'image. Ces huit points initialisent un contour modélisé par des quarts d'ellipse.

Le casque des cheveux peut être segmenté à partir de la détection du contour du visage en associant le filtrage du fond de l'image à l'utilisation de contours actifs. Des points caractéristiques situés sur le contour des cheveux sont ainsi détectés. Entre chacun de ces points, le modèle utilisé peut être une courbe polynomiale cubique.

Il se peut que l'extraction automatique d'un ou plusieurs points échoue, dans ce cas le ou les points peuvent être très facilement replacés manuellement pour replacer correctement le ou les modèles et aborder leur phase d'évolution.

Dans la phase d'évolution des modèles, chaque modèle est déformé 14 afin de coïncider au mieux avec les contours des traits présents sur le visage analysé. Cette déformation se fait par maximisation d'un flux de gradient de luminance et/ou de chrominance, le long des contours définis par chaque courbe du modèle.

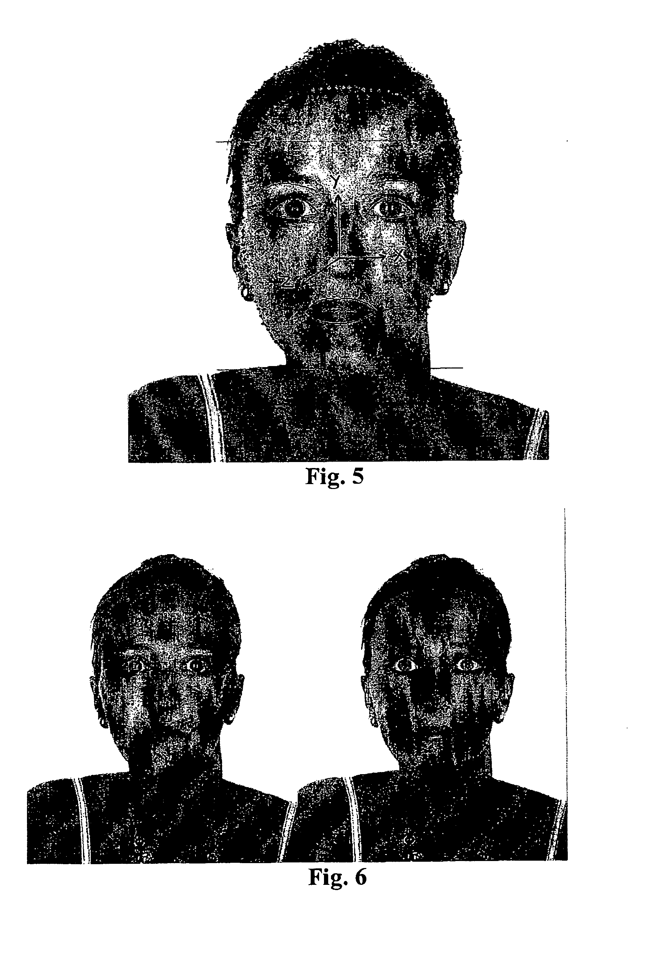

La définition de modèles permet d'introduire naturellement une contrainte de régularisation sur les contours recherchés. Néanmoins, les modèles choisis restent suffisamment flexibles pour permettre une extraction réaliste des contours des yeux, des sourcils et de la bouche. La figure 5 représente le résultat de l'extraction automatique des zones caractéristiques du visage à savoir le contour du visage, les iris, les yeux, la bouche, les sourcils, et le casque des cheveux qui forment respectivement des modules anthropométriques du visage, selon un aspect de la présente invention.

Dans un troisième temps, le logiciel procède au suivi du visage/tête et des traits caractéristiques du visage dans la séquence vidéo. Lors du suivi, les résultats obtenus dans les images précédentes fournissent des informations supplémentaires susceptibles de rendre la segmentation plus robuste et plus rapide.

La procédure de suivi précis, selon un mode de réalisation avantageux de la présente invention, utilise un algorithme qui permet de suivre des points caractéristiques d'une image à l'autre. Cette méthode différentielle, n'utilisant que le voisinage de points, apporte un gain de temps significatif par rapport à une technique d'extraction directe. Ce procédé s'appui sur l'équation de contrainte du mouvement apparent issue d'un développement de Taylor de l'équation ci-dessous :

$$I_t(x - d(x)) = I_{t+1}(x)$$

On suppose que le voisinage du point suivi dans l'image $I_t$ se retrouve dans l'image suivante $I_{t+1}$, par une translation. d(x) est le vecteur déplacement du pixel de coordonnée x ou x est un vecteur. Considérons un voisinage R de taille nxn dans l'image de référence prise au temps t. Le but est donc de retrouver dans l'image suivante la région la plus ressemblante à R. Si on note $I_t(x)$ et $I_{t+1}(x)$ les valeurs de niveaux de gris dans ces deux images, le procédé minimise la fonction de coût égale à la somme des différences inter pixels au carré.

De plus, pour éviter l'accumulation des erreurs de suivi, qui donnerait des résultats approximatifs, le procédé utilise avantageusement un recalage des points caractéristiques en utilisant une version simplifiée des contours actifs et/ou en déformant les courbes du modèle obtenu à l'image précédente. Finalement, les contours finaux sont extraits. Pour cela, la forme des zones caractéristiques dans l'image précédente ainsi que les points caractéristiques sont utilisés pour calculer les courbes optimales constituant les différents modèles.

Au cours de la phase de transformation, les outils de reconnaissance et de suivi des zones anthropométriques du visage dans l'image communiquent toutes les données qu'ils ont extraites à la phase de transformation. En fonction de critères multiples prévus en base de données et/ou selon le cas en fonction de critères de décision d'un système expert d'ordre 0+ ou 1, le module va alors déterminer les traitements à effectuer. Ceux ci seront déterminés par le thème ou les thèmes que l'utilisateur aura choisis. Ainsi par exemple, s'il s'agit d'une opération de maquillage, les zones caractéristiques du visage, définies selon les résultats d'extraction et selon la fonction choisie par l'utilisateur (look/palette), sont modifiées automatiquement dans la séquence d'images consécutives en fonction de choix harmoniques et personnalisés. Par exemple, pour un visage rond, le procédé estompe les côtés du visage dans un ton plus foncé. Au contraire, pour un visage triangulaire, le procédé estompe les côtés du visage dans un ton plus clair. L'utilisateur peut choisir le look, présent dans une base de données, qu'il souhaite appliquer au visage apparaissant dans les images consécutives. Les looks sont des dessins particuliers définis au préalable avec l'homme du métier. Ces dessins et formes appropriés se caractérisent comme étant des gabarit virtuels préalablement définis qui vont être recalculés et réajustés aux zones du visage auxquelles ils s'opèrent, en fonction des informations issues du module d'extraction et de suivi, du contexte de l'image et des effets qu'ils doivent suggérer.

L'utilisateur peut également choisir zone par zone (lèvres, yeux, pommettes, visage, etc.) la couleur qu'il souhaite appliquer. Ces couleurs seront en harmonie avec les caractéristiques du visage. Ainsi, le système expert détermine une palette de couleurs disponibles, corrélées avec celles d'une gamme disponible dans sa ou ses bases de données, en fonction des données issues de la phase d'initialisation et d'évolution.

Ainsi, lors de la phase de restitution, l'outil va pouvoir réaliser une proposition de coloriage en harmonie avec le visage par exemple, mais aussi proposer une sélection de couleurs, parmi une gamme, en parfaite harmonie avec le visage. Les couleurs complétées de leurs textures originales sont analysées, calculées et définies dans leur contexte particulier (les rouges à lèvres ou les gloss ou les poudres notamment).

Les outils vont alors appliquer en fonction de la texture de la zone (lèvre, joue, cheveux, etc.) la couleur correspondant au maquillage, mais aussi de façon transparente l'effet du produit cosmétique, c'est-à-dire que l'on va reproduire son aspect réel, par exemple sa brillance, son aspect poudré ou pailleté (rouge à lèvres pailleté sur la figure 6, son aspect mâte notamment. Cette opération prend en compte le contexte de la séquence d'images consécutives dans chacune de leurs zones respectives (éclairages, luminosité, ombres, reflets, etc.), ce qui va permettre à l'aide d'outils algorithmiques de calculer leurs textures, de les définir dans leur aspect réel, telle qu'elles seraient reproduite dans la réalité.

Par ce procédé, on améliore sensiblement la qualité et les propriétés réalistes de la séquence d'images consécutives. De plus, certaines particularités du visage sont améliorées. Ainsi par exemple, les rides frontales, les rides pattes d'oie, les cernes, les rides du lion, les sillons nasogéniens, les plis d'amertume, les rides péribuccales, les tâches de rousseur, l'acné et la couperose sont fortement estompées.

Également, des traitements esthétiques comme le blanchiment du visage, le bronzage, le blanchiment des dents, l'élévation des paupières, l'épaississement des lèvres, la rectification légère de l'ovale du visage, la rectification de la forme du menton et/ou du nez, le rehaussement et augmentation des pommettes sont simulés automatiquement pour un visage apparaissant dans une séquence vidéo.

On peut aussi améliorer l'esthétique du visage en relation avec une nouvelle coiffure, et/ou une coloration capillaire. Il est aussi possible d'ajuster la couleur, la matière, la forme et/ou les dimensions adéquates des montures de lunettes, des bijoux et/ou d'accessoires d'ornement avec le visage, ou d'ajuster des verres de contact de couleurs ou d'amusement en adéquation avec la teinte de l'iris. Il est aussi possible d'appliquer l'invention aux techniques de biométrie faciale, par exemple pour identifier avec un taux optimal de fiabilité un visage connu dont les informations caractéristiques sont chargées dans la base de données du système expert. On peut aussi réaliser des photos d'identité numériques à la norme du passeport biométrique.

L'invention permet aussi de reconnaître des visèmes qui décrivent les différentes configurations, ou différents phonèmes prononcés, d'une bouche parlante. Elle permet ainsi de déterminer la personnalité et le caractère d'une personne, examiné à partir de l'observation morphologique de son visage/tête, tel que, par exemple, la présence des plis d'amertume, la taille et l'écartement des yeux, la taille et la forme du nez, du lobe des oreilles, la base de données correspondant à l'observation des visages étant alors complétée par les techniques mises en oeuvres par les morpho psychologues, les psychiatres, les profileurs et les anatomistes dans le domaine considéré.

Il est aussi envisageable d'appliquer l'invention à la photographie numérique réalisée notamment en cabine de photos d'identités et/ou d'amusement, sur des bornes automatiques de développement de photos numériques instantanées, sur systèmes infographiques de retouches et de développements d'images, permettant de grimer, d'améliorer ou de valoriser l'esthétique de l'image d'un utilisateur, la base de donnée étant alors complétée par une collection de règles esthétiques et de looks de grimages, utilisables simultanément ou non, concernant le maquillage, l'amusement, la coiffure, les techniques capillaires, la texture de la peau, et l'accessoirisation.

L'ensemble des éléments RVB ou rouge, vert, bleu complétés des indications dessins, seuillages et coordonnées constituant la réalisation d'un « Look » ou la visualisation naturelle d'un rouge à lèvres dans une palette par exemple, peuvent être réalisés et enregistrés sous forme d'un simple fichier composé d'une chaîne alphanumérique de faible poids diffusable sur tous supports numériques ou télécharger depuis un serveur sur les Réseaux numériques tel Internet. Ce fichier peut servir à la mise à jour artistique de la base de données ou du système expert de façon souple et rapide ou être utilisé immédiatement par l'utilisateur à partir d'un simple téléchargement depuis une page Web par exemple.

De manière générale, la base de données associée au système expert est enrichie de règles spécifiques relatives à l'application de l'invention, par exemple la cosmétique et/ou dermatologie, la chirurgie plastique et/ou médecine esthétique, l'ophtalmologie, la techniques des visagistes et/ou des coiffeurs, la biométrie faciale, *etc.*

Ainsi, le traitement est indépendant du contenu ce qui permet une utilisation du procédé à une échelle industrielle et une très forte propagation de son utilisation avec un fort accroissement du rendement.

D'une façon plus générale, les traits caractéristiques du visage dans la séquence vidéo sont modifiés en fonction de décisions de la base de données et/ou du système expert. La figure 6 représente le résultat avant/après d'une simulation de maquillage (look), d'accessoires (lentilles de couleur, piercing), et de coloration capillaire pour une image extraite d'une séquence vidéo acquise par une caméra vidéo couleur.

Le module de restitution se traduit par, selon la présente invention, l'affichage de la séquence d'images transformées sur n'importe quel type d'écran couleur et/ou ensuite par une impression d'une ou plusieurs images simulées sur n'importe quel format de papier et/ou via un serveur sur tous réseaux numériques.

Pour la simulation, la phase de restitution se traduit par une proposition esthétique caractérisée par la transformation de la séquence vidéo initiale en une nouvelle séquence vidéo virtuelle sur laquelle apparaissent en parfaite concordance les modifications esthétiques souhaitées. Par exemple un maquillage, complété d'accessoires et d'une couleur capillaire et les références et prix de vente des produits correspondants dans une ou plusieurs marques.

Une image statique choisie par l'utilisateur parmi la séquence vidéo, peut être ensuite édité localement, sur une imprimante couleur de type aiguilles, jet d'encre, jet d'encre solide, laser, ou à sublimation thermique, dans un format A4 ou tout autre format disponible techniquement.

Le contenu de ses informations formule une ordonnance beauté, reprenant l'image initiale et l'image transformée, des conseils techniques et scientifiques, des astuces professionnelles, les caractéristiques du visage (forme, couleur, etc.), la photo des produits, la palette de couleurs personnelles en harmonie avec les caractéristiques du visage transformées, un conseil couleur vêtement par rapport à nos couleurs etc. Les résultats peuvent être de la même manière édités sur des imprimantes délocalisées haute définition d'un serveur Internet qui se chargera de les expédier à l'adresse postale de l'utilisateur.

Ces mêmes résultats peuvent être traduits, de la même manière, sur ou dans différents supports pré imprimés ou non (CV, carte postale virtuelle, clip multimédia, vidéo, calendrier, bannière, affichette, album photo, etc.) disponibles à travers les applications du serveur. Ils peuvent être archivés dans tous les types de mémoires du terminal ou sur le serveur Internet pour une utilisation ultérieure.

La nouvelle image et/ou la nouvelle séquence vidéo complétée ou non des informations peut être expédiée par la fonction email et à l'aide de la commande « Insertion pièce jointe » à un ou plusieurs correspondants disposant d'une adresse électronique de type email. Il en va de même avec un appareil de téléphonie mobile disposant d'un mode MMS, email ou à venir.

On conçoit facilement que ce système peut recevoir de très nombreuses applications en complétant le ou les système(s) expert(s) et/ou la ou les base(s) de données locale(s) ou déportée(s) par des données scientifiques et techniques spécifiques.

L'invention peut trouver une application pour le traitement d'images en deux ou trois dimensions. Dans une application 3D, on peut construire une modélisation 3D du visage, pour y appliquer précisément des maquillages 3D. La reconstruction 3D du visage, à partir d'une image statique du visage ou d'un flux d'images de visages, est réalisée à l'aide d'algorithmes et procédures conventionnelles, telles que l'analyse des ombres, de la texture, du mouvement, l'utilisation de modèles 3D génériques du visage ou encore par l'utilisation d'un système stéréoscopique.

Bien que l'invention ait été décrite en référence à divers modes de réalisation avantageux, il est entendu qu'elle n'est pas limitée par cette description, et que l'homme du métier peut y apporter toutes modifications sans sortir du cadre de la présente invention défini par les revendications annexées.

**Revendications**

1. Procédé automatique de simulation virtuelle d'une image à partir d'une image réelle d'un visage, comprenant:

   • la détection et l'analyse des formes et/ou contours et/ou composantes dynamiques d'une image d'un visage ;
   • l'extraction de points caractéristiques du visage, tels que les coins des yeux et de la bouche, au moyen de modèles paramétriques prédéfinis;
   • la définition de modèle paramétriques spécifiques à partir desdits points caractéristiques extraits, servant de points d'amorçage initiaux ;
   • la déformation desdits modèles spécifiques pour s'adapter aux contours des traits présents sur le visage analysé ;
   • ladite déformation étant effectuée par la maximisation d'un flux de gradient de luminance et/ou de chrominance le long des contours définis par chaque courbe du modèle ;

   ledit procédé étant **caractérise en ce qu'**il comporte une étape dé modelisation du contour du visage basée sur des points caractéristiques situés sur ce contour.

2. Procédé selon la revendication 1, dans lequel lesdits points du contour sont extraits à partir d'un seuillage dans le :plan V de la représentation HSV de l'image,

3. Procédé selon l'une des revendications 1 ou 2, dans lequel le casque des cheveux est segmenté à partir de la détection du contour du visage en associant le filtrage du fond de l'image à l'utilisation de contours actifs, permettant ainsi la détection de points caractéristiques situés sur le contour des cheveux.

4. Procédé selon l'une des revendications 1 à 3, dans lequel l'étape de modélisation du contour du visage utilise deux points au niveau des yeux.

5. Procédé selon l'une des revendications 1 à 4, dans lequel l'étape de modélisation du contour du visage utilise deux points au niveau des sourcils.

6. Procédé selon l'une des revendications 1 à 5, dans lequel l'étape de modélisation du contour du visage utilise deux points au niveau de la bouche.

7. Procédé selon l'une des revendications 1 à 6, dans lequel l'étape de modélisation du contour du visage utilise un point au niveau du menton.

8. Procédé selon l'une des revendications 1 à 7, dans lequel l'étape de modélisation du contour du visage utilisé un point au niveau du front.

9. Procédé selon l'une des revendications précédentes, comprenant une étape de modélisation dés lèvres au moyen d'une pluralité dé points caractéristiques reliés par une pluralité de courbes cubiques.

10. Procédé selon la revendication 9, dans lequel cinq courbes cubiques indépendantes sont utilisées pour la modélisation des lèvres, l'arc de cupidon étant décrit par une ligne brisée.

11. Un produit programme d'ordinateur destiné à être chargé dans une mémoire associée à un processeurs, le produit programme d'ordinateur comportant des portions de code de logiciel mettant en oeuvre le procédé selon l'une des revendications 1 à 10 lorsque Je programme est exécuté par le processeur.

**Fig. 1**

**Fig. 2**

**Fig. 3**

**Fig. 4**

**Fig. 5**

**Fig. 6**

Europäisches
Patentamt

European
Patent Office

Office européen
des brevets

**RAPPORT DE RECHERCHE EUROPEENNE**

Numéro de la demande

EP 11 00 7429

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,P | WO 2006/127177 A (MICROSOFT CORP [US]) 30 novembre 2006 (2006-11-30) * le document en entier * | 1-11 | INV. G06T11/00 H04N1/62 |
| Y | EISERT P.: "Immersive 3-D Video Conferencing: Challenges, Concepts, and Implementations", PROCEEDINGS OF SPIE, VCIP 2003 CONFERENCE, vol. 5150, 8 juillet 2003 (2003-07-08), - 11 juillet 2003 (2003-07-11), pages 69-79, XP002433012, * abrégé * * page 76; figure 12 * | 1-11 | |
| Y | FR 2 783 949 A1 (ROBIN LUCETTE [FR]) 31 mars 2000 (2000-03-31) * abrégé * * page 6 - page 16; figures 1-6 * | 1-11 | |
| Y | WO 96/21201 A (ROBIN JEAN MARC [FR]; GAUDEAU CLAUDE [FR]) 11 juillet 1996 (1996-07-11) * abrégé * * pages 1-6; figures 1-4 * | 1-11 | DOMAINES TECHNIQUES RECHERCHES (IPC) G06T A61B H04N G06F G06K |
| A | PEARSON D E: "DEVELOPMENTS IN MODEL-BASED VIDEO CODING", PROCEEDINGS OF THE IEEE, IEEE. NEW YORK, US, vol. 83, no. 6, juin 1995 (1995-06), pages 892-906, XP000518742, ISSN: 0018-9219 * page 898 - page 900 * | 1-11 | |

-/--

Le présent rapport a été établi pour toutes les revendications

| Lieu de la recherche | Date d'achèvement de la recherche | Examinateur |
|---|---|---|
| Munich | 12 mars 2012 | Borotschnig, Hermann |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 11 00 7429

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | OHLER J.: "Digital makeup makes anyone look attractive", TECH WIT, JUNEAU EMPIRE ONLINE , 2 août 2006 (2006-08-02), pages 1-2, XP002433013, Extrait de l'Internet: URL:http://www.jasonohler.com/publications/techwit.cfm [extrait le 2007-05-08] * le document en entier * ----- | 1-11 | |
| A | SHDAIFAT I ET AL: "Active shape lip modeling", PROCEEDINGS 2003 INTERNATIONAL CONFERENCE ON IMAGE PROCESSING. ICIP-2003. BARCELONA, SPAIN, SEPT. 14 - 17, 2003, INTERNATIONAL CONFERENCE ON IMAGE PROCESSING, NEW YORK, NY : IEEE, US, vol. VOL. 2 OF 3, 14 septembre 2003 (2003-09-14), pages 875-878, XP010669897, ISBN: 0-7803-7750-8 * section 2.2, Fig. 3 * ----- | 1-11 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 12 mars 2012 | Borotschnig, Hermann |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

&  : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 11 00 7429

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-03-2012

| Document brevet cité au rapport de recherche | | Date de publication | Membre(s) de la famille de brevet(s) | | Date de publication |
|---|---|---|---|---|---|
| WO 2006127177 | A | 30-11-2006 | US | 2006268101 A1 | 30-11-2006 |
| | | | WO | 2006127177 A2 | 30-11-2006 |
| FR 2783949 | A1 | 31-03-2000 | AUCUN | | |
| WO 9621201 | A | 11-07-1996 | AU | 4452296 A | 24-07-1996 |
| | | | FR | 2728982 A1 | 05-07-1996 |
| | | | WO | 9621201 A1 | 11-07-1996 |

EPO FORM P0460

Pour tout renseignement concernant cette annexe : voir Journal Officiel de l'Office européen des brevets, No.12/82

**EP 2 450 852 A1**

## RÉFÉRENCES CITÉES DANS LA DESCRIPTION

**Documents brevets cités dans la description**

*   WO 0175796 A